# EUROPÄISCHE PATENTSCHRIFT

(11) **EP 3 249 103 B1**
(45) Veröffentlichungstag und Bekanntmachung des Hinweises auf die Patenterteilung: **26.08.2020**
(21) Anmeldenummer: 16171717.8
(22) Anmeldetag: 27.05.2016
(51) Int. Cl.: E02B 3/10, E02B 7/22, E02B 7/54, E04H 9/14, E04H 17/20

(54) **STÜTZE EINER HOCHWASSERSCHUTZWAND**
SUPPORT OF A FLOOD PROTECTION WALL
SUPPORT POUR UN MUR DE PROTECTION CONTRE L'INONDATION

(43) Veröffentlichungstag der Anmeldung: 29.11.2017
(73) Patentinhaber: Steinhardt GmbH, 65232 Taunusstein (DE)
(72) Erfinder: Steinhardt, Jörg-Michael, 65232 Taunusstein (DE)
(74) Vertreter: Quermann, Helmut

(56) Entgegenhaltungen:
- AT-A4- 505 404
- DE-A1-102014 101 780
- FR-A1- 2 871 494
- GB-A- 2 500 099

## Beschreibung

Die Erfindung betrifft eine Stütze einer Hochwasserschutzwand, wobei die Stütze auf abgewandten Seiten der Lagerung von übereinander stapelbaren Dammbalken der Hochwasserschutzwand dient, sowie die Stütze entgegengesetzt angeordnete U-förmige Aufnahmen für Enden der Dammbalken aufweist.

Hochwasserschutzwände, insbesondere mobile demontierbare Hochwasserschutzwände sind aus dem Stand der Technik in vielfältiger Weise bekannt. Bei Hochwasserschutzwänden werden in aller Regel übereinander stapelbare Dammbalken verwendet, die zueinander abgedichtet sind und mit ihren Enden jeweils in Stützen im Bereich dort ausgebildeter U-förmiger Profile eingelegt sind. Die Dammbalken bestehen dabei vorzugsweise aus stranggepresstem Aluminium oder einer Aluminiumlegierung und sind als Hohlprofile ausgebildet. Auch die Stützen sind vorzugsweise stranggepresste Bauteile und bestehen insbesondere aus Aluminium oder einer Aluminiumlegierung. Die Stützen werden, vertikal angeordnet, im Boden auf unterschiedlichste Art und Weise verankert. Unter Einwirkung des sich aufgrund des Flüssigkeitsstandes des Hochwassers ergebenden Drucks auf die Dammbalken, beaufschlagen die Dammbalken in den Stützen gelagerte elastische Dichtungselemente, sodass eine Abdichtung von Stützen und Dammbalken auf der Trockenseite der Hochwasserschutzwand erfolgt.

Eine Stütze einer Hochwasserschutzwand ist aus der DE 299 16 656 U1 bekannt. Diese Stütze ist einteilig ausgebildet und weist zwei entgegengesetzt gerichtete U-förmige Aufnahmen für die übereinander gestapelten Dammbalken auf. Die Stütze ist im horizontalen Querschnitt spiegelsymmetrisch ausgebildet, sodass bei deren Montage keine bevorzugte Richtung einzuhalten ist. Die Stütze weist ein Hohlprofil auf. Die zu einer Trockenseite und zu einer Hochwasserseite gerichteten Seiten des Profils unterscheiden sich nur dadurch, dass in einen zur Trockenseite gerichteten Schenkel der U-förmigen Aufnahmen für die Enden der Dammbalken eine senkrecht verlaufende Dichtung angeordnet ist.

Nachteilig ist bei dieser bekannten, einteiligen Stütze, die insbesondere aus Leichtmetall, wie Aluminium besteht, dass sie nicht für große Einstauhöhen geeignet ist. So lassen sich lange Stützen, die zum Beherrschen der großen Einstauhöhen erforderlich sind, nicht in der erforderlichen Stabilität durch Gießen oder Strangpressen herstellen.

Eine Stütze einer Hochwasserschutzwand ist ferner aus der EP 2 060 680 A1 bekannt. Dort dient eine Stützenanordnung von zwei nebeneinander angeordneten Stützen der Aufnahme einer Vielzahl von Dammbalken. Ergänzend ist eine Abstützung der jeweiligen Stütze vorgesehen. So ist ein zwischen zwei Schenkeln der U-förmigen Aufnahme befindlicher Steg so bemessen, dass dessen Erstreckung wesentlich größer ist als die Erstreckung des jeweiligen Schenkels. Hierdurch ist es möglich, neben der jeweiligen Stütze eine weitere, identisch gestaltete Stütze vorzusehen. Diese weitere Stütze nimmt die Stütze, die den Dammbalken aufnimmt, im Bereich des Steges der weiteren Stütze auf, zwischen den beiden Schenkeln.

Eine Stütze einer Hochwasserschutzwand, die die Merkmale des Oberbegriffs des Patentanspruchs 1 aufweist, ist aus der DE 10 2014 101 780 A1 bekannt. Diese Stütze besteht aus drei Stützenteilen. Zwischen den beiden Stützenteilen mit U-förmiger Aufnahme ist ein drittes Stützenteil angeordnet. Die beiden Stützenteile mit den U-förmigen Aufnahmen sind auf deren einander zugewandten Seiten mit dem dritten Stützenteil mittels Befestigungsmitteln verbunden.

In der AT 505 404 A4 ist eine in einem Boden lagerbare Stütze einer Hochwasserwand beschrieben, wobei die Stütze auf abgewandten Seiten entgegengesetzt gerichtete U-förmige Aufnahmen zum Einstecken von übereinander stapelbaren Dammbalken der Hochwasserschutzwand aufweist. Zusätzlich weist das jeweilige U-förmige Profil der einteiligen Stütze einen im Profil T-förmigen Vorsprung zum Aufschieben eines Profils auf. Dieses Profil ist ein Winkelprofil, das es ermöglicht, in diesem stapelbare Dammbalken in einem stumpfen Winkel zu den im anderen Profil der Stütze gestapelten Dammbalken anzuordnen. Die Dammbalken werden bei dieser Gestaltung nur in dem einen U-förmigen Profil der Stütze und dem Winkelprofil aufgenommen.

Aufgabe der vorliegenden Erfindung ist es, eine Stütze der eingangs genannten Art so weiterzubilden, dass diese universell einsetzbar ist, insbesondere bei einer mobilen, somit auf- und abbaubaren Hochwasserschutzwand.

Gelöst wird die Aufgabe durch eine Stütze, die gemäß den Merkmalen des Patentanspruchs 1 ausgebildet ist.

Bei der erfindungsgemäßen Stütze ist somit vorgesehen, dass diese mehrteilig ausgebildet ist. Ein Stützenteil der Stütze weist eine U-förmige Aufnahme und ein weiteres Stützenteil eine andere U-förmige Aufnahme auf. Die Verbindung des jeweiligen Stützenteils zur Bildung der Stütze erfolgt in dem Bereich dieses Stützenteils, der dem anderen Stützenteil zugewandt ist.

Aufgrund des Umstands, dass die Stütze mehrteilig ausgebildet ist, können insbesondere in einem Gieß- oder Pressprozess, insbesondere mittels Strangpressen, wesentlich längere und größere Stützenteile hergestellt werden. Solche Stützenteile lassen sich einfach und kostengünstig herstellen. Durch Verbund dieser Stützenteile lässt sich dann die Stütze bilden, die besonders lang ist und eine besonders große Festigkeit aufweist.

Die beiden Stützenteile sind aneinanderliegend angeordnet. Somit sind in aller Regel die beiden Stützenteile unmittelbar miteinander verbunden.

Das jeweilige Stützenteil weist auf seiner dem anderen Stützenteil zugewandten Seite mindestens eine Aufnahme für mindestens ein mechanisches Verbindungsmittel auf, zwecks Verbinden dieser beiden Stützenteile durch Zusammenwirken des Verbindungsmittels mit den beiden Stützenteilen. Sinn und Zweck der Verbindungsmittel besteht in erster Linie darin, die beiden Stützenteile miteinander zu verbinden, und zwar mechanisch. Die jeweilige Aufnahme für das Verbindungsmittel ist als sich in Längsrichtung des Stützenteils erstreckende hinterschnittene Nut ausgebildet und das Verbindungsmittel als Stab ausgebildet, wobei der Stab in benachbart angeordnete Nuten der beiden Stützenteile eingesteckt ist.

Bevorzugt ist der Stab als im Querschnitt H-förmiger Stab ausgebildet. Die Funktion des H-förmiges Stabs ist primär darin zu sehen, die aneinanderliegenden Stützenteile insgesamt zu versteifen, da der im Querschnitt H-förmige Stab sowohl die eine hinterschnittene Nut im einen Stützenteil als auch die andere hinterschnittene Nut im anderen Stützenteil durchsetzt.

Bevorzugt ist das jeweilige Stützenteil als Hohlkörper ausgebildet, der zusätzlich mit Stegen versehen sein kann. Hierdurch ergeben sich, bei entsprechend großem Profilquerschnitt des Stützenteils, recht hohe einleitbare Biegemomente, die die Stütze aufnehmen kann.

Vorzugsweise besteht das jeweilige Stützenteil aus Metall, insbesondere aus Aluminium oder einer Aluminiumlegierung. Durch Wahl dieses Leichtmetalls ist das Gewicht der Stütze relativ gering, bei guter Verarbeitbarkeit des verwendeten Materials und akzeptablem Preis des Ausgangsmaterials. Abgesehen hiervon ermöglicht es das relativ geringe Gewicht der Stütze, die Hochwasserschutzwand mit vertretbarem Krafteinsatz, insbesondere vertretbarer Anzahl von Arbeitskräften zu installieren und wieder abzubauen.

Kumulativ können Verbindungsmittel vorgesehen sein, die als Klebemittel ausgebildet sind. Auch Klebemittel sind hervorragend geeignet, aus Metall bestehende Teile, vorliegende die Stützenteile, miteinander zu verbinden. Gemäß einer weiteren Variante ist vorgesehen, dass die Stützenteile miteinander verschweißt sind. Somit lassen sich die Stützenteile grundsätzlich lösbar oder unlösbar miteinander verbinden. Hierbei wird unter einer lösbaren Verbindung eine solche verstanden, die ein Demontieren der beiden Stützenteile ohne Zerstörung des Verbindungsmittels erlaubt.

Es wird als besonders zweckmäßig angesehen, wenn das jeweilige Stützenteil auf seiner dem anderen Stützenteil zugewandten Seite mindestens eine Aufnahme für mindestens ein mechanisches Versteifungsmittel aufweist, zwecks Versteifen dieser beiden Stützenteile durch Zusammenwirken des Versteifungsmittels mit den beiden Stützenteilen. Der Sinn und Zweck der Versteifungsmittel ist darin zu sehen, dass diese mit einem oder beiden der Stützenteile derart zusammenwirken, dass das Stützenteil insgesamt steifer wird. Diese Erhöhung der Steifigkeit der Stütze ist von besonderem Vorteil, wenn hohe Kräfte auf die Stütze bei einem großen Hochwassereinstau wirken.

Es wird als besonders vorteilhaft angesehen, wenn die jeweilige Aufnahme für das Versteifungsmittel als sich in Längsrichtung des Stützenteils erstreckende Nut ausgebildet ist, und das Verbindungsmittel als Stab, insbesondere im Querschnitt rechteckiger Stab ausgebildet ist, wobei der Stab in benachbart angeordnete Nuten der beiden Stützenteile eingesetzt ist. Der Stab hat insbesondere die Funktion, Schubkräfte, die zwischen den beiden Stützenteilen senkrecht zu deren Längsrichtung wirksam sind, aufzunehmen. Hierfür ist der in Längsrichtung der Stütze angeordnete Stab teilweise in die Nut des einen Stützenteils und teilweise in die Nut des anderen Stützenteils eingesteckt, sodass der Stab geeignet ist, die Scherkräfte, die senkrecht zur Längsrichtung der Stützenteile zwischen diesen wirksam sind, aufzunehmen.

Es ist insbesondere vorgesehen, dass sich der Stab über eine Teillänge oder die gesamte Länge der Stütze erstreckt. Insbesondere unter dem Aspekt der Erstreckung über die Teillänge des Stabes wird es als besonders vorteilhaft angesehen, wenn sich der Stab über mindestens 10 Prozent der Stützenlänge erstreckt.

Gemäß einer besonderen Weiterbildung der Erfindung ist vorgesehen, dass die die U-förmigen Aufnahmen aufweisenden Stützenteile Aufnahmen für mindestens ein die Stütze verstärkendes Verstärkungsteil aufweisen. Dieses Verstärkungsteils, das insbesondere in Längsrichtung oder in Querrichtung der Stütze verläuft, ist mit diesen beiden Stützenteilen verbunden. Vorzugsweise ist das Verstärkungsteil mit diesen beiden Stützenteilen dauerhaft verbunden, insbesondere mit diesen beiden Stützenteilen verschweißt. Diese Verstärkungsteile verleihen der Stütze eine wesentlich höhere Biegesteifigkeit und Biegeknicksteifigkeit. Eines der Verstärkungsteile ist beispielsweise in Art eines Haltegriffs ausgebildet, sodass durch Ergreifen der Stütze im Bereich dieses Verstärkungsteils ein vereinfachter Transport der Stütze möglich ist. Dies gestattet es, die Stütze als Bestandteil der Hochwasserschutzwand relativ einfach mit einer Person oder bei Vorliegen mehrerer derartiger Griffe durch mehrere Personen zu transportieren. Außerdem lässt sich eine mit einem solchen griffartigen Verstärkungsteil versehene Stütze einfach halten, wenn die Stütze beim Aufbau der Hochwasserschutzwand verankert wird.

Es wird als bevorzugt angesehen, wenn das Verstärkungsteil senkrecht zur Längserstreckung oder in Längserstreckung der Stütze angeordnet ist.

Bei dem Verstärkungsteil handelt es sich bevorzugt um ein Blech. Im Allgemeinen wird dieses Blech als Knotenblech bezeichnet.

Unter dem Aspekt der Abdichtung der Anordnung von Stütze und von dieser aufgenommener Dammbalken wird es als besonders vorteilhaft angesehen, wenn die Stütze in deren Längserstreckung verlaufende Dichtungselemente aufweist. Insbesondere sind Dichtungselemente zwischen den Stützenteilen und/oder Dichtungselemente an den zu einer Trockenseite der Hochwasserschutzwand gelegenen Schenkeln der U-förmigen Aufnahmen vorgesehen.

Es wird somit insbesondere eine Stütze vorgeschlagen, die sich besonders kostengünstig aufgrund von Streckverbindungen zum Verbinden und Ausstreifen der Stützenteile montieren lässt. In diskreten Bereich erfolgen dann weitere Verbindungen, insbesondere Schweißverbindungen.

Weitere Merkmale der Erfindung sind in den Unteransprüchen, der Beschreibung der nachfolgenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines Ausführungsbeispieles dargestellt, ohne auf dieses beschränkt zu sein. Es zeigt:
- Fig. 1: für das Ausführungsbeispiel einer Stütze die Anordnung zweier vertikal nebeneinander angeordneter Stützen einer Hochwasserschutzwand mit diversen in diesen gelagerten, übereinandergestapelten Dammbalken, veranschaulicht in einer Draufsicht,
- Fig. 2: eine räumliche Ansicht der Stütze gemäß Fig. 1,
- Fig. 3: eine Seitenansicht dieser Stütze (Ansicht III in Fig. 4),
- Fig. 4: eine Seitenansicht dieser Stütze (Ansicht IV in Fig. 3),
- Fig. 5: eine Ansicht der Stütze, ohne Niederhalter für Dammbretter gezeigt, gemäß Ansicht V in Fig. 3,
- Fig. 6: einen Schnitt durch die Stütze gemäß der Linie VI-VI in Fig.3,
- Fig. 7: einen Schnitt durch die Stütze gemäß der Linie VII-VII in Fig. 3.

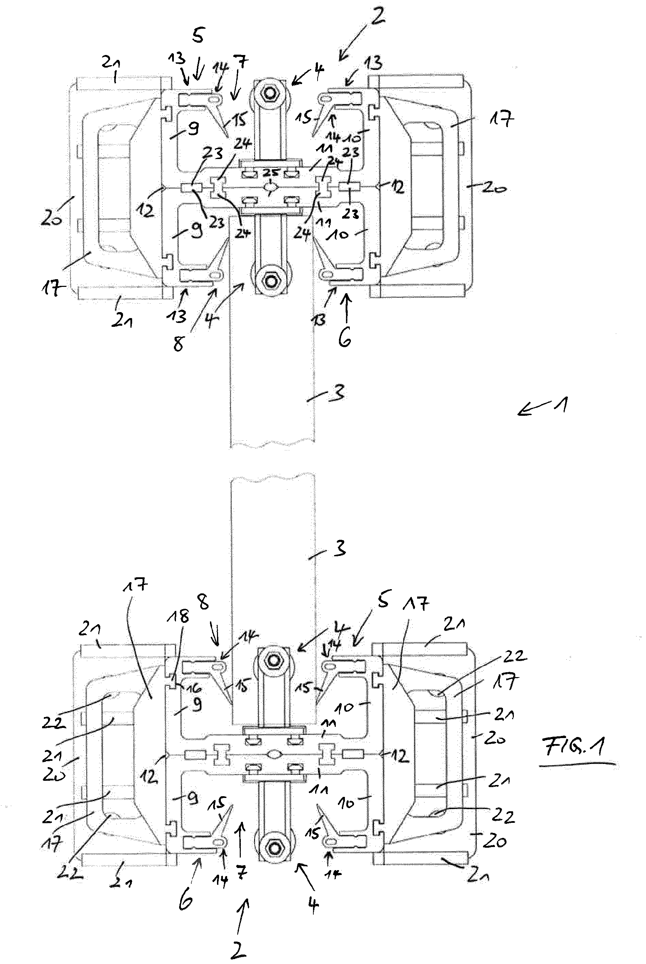

Fig. 1 zeigt eine Grundstruktur einer Hochwasserschutzwand 1 mit zwei dort veranschaulichten, in Abstand zueinander angeordneten und vertikal positionierten Stützen 2. Die beiden Stützen 2 dienen auf ihren einander zugewandten Seiten der Aufnahme mehrerer übereinander gestapelt angeordneter und zueinander abgedichteter Dammbalken 3. Hierzu ist der jeweilige horizontal angeordnete Dammbalken mit einer sich über dessen Länge erstreckenden Dichtung versehen, die zur Oberseite des darunter befindlichen Dammbalkens bzw. betreffend den untersten Dammbalken zu einem Boden hin abdichtet. Der jeweilige Dammbalken 3 ist als Spritzgussteil ausgebildet und besteht aus Aluminium oder einer Aluminiumlegierung. In der jeweiligen Stütze 2 sind vertikal einstellbare Niederhalter 5 gelagert, die die Anordnung der übereinandergestapelten Dammbalken 3 gegen den Boden vorspannen, indem der jeweilige Niederhalter auf die obere Fläche des obersten Dammbalkens 3 drückt.

Die Stütze 2 besteht aus mindestens zwei Stützenteilen 5, 6. Diese beiden Stützenteile 5, 6 sind identisch ausgebildet, und zwar als Spritzgussteil. Sie bestehen aus Aluminium oder einer Aluminiumlegierung.

Das Stützenteil 5 weist eine erste U-förmige Aufnahme 7 und das zweite Stützenteil 6 eine zweite U-förmige Aufnahme 8 auf. Jede Aufnahme 7 bzw. 8 weist zwei parallele Schenkel 9, 10 und einen diese Schenkel 9, 10 verbindenden Steg 11 auf. Die beiden Stützenteile 5 und 6 liegen im Bereich der beiden Stege 11 aneinander und sind dort miteinander verbunden. Somit bildet die Anordnung der beiden Seitenteile 5 und 6 einen im Wesentlichen H-förmigen Querschnitt. Im Bereich der abgewandten Außenkontur des H, dort wo die beiden Stützenteile 5 und 6 aneinanderliegen, sind die beiden Stützenteile 5 und 6 mittels sich über die Länge der Stütze 2 erstreckender Schweißnähte 12 verschweißt.

Die jeweilige Aufnahme 7 bzw. 8 weist im Bereich des Endes, das der anderen Aufnahme abgewandt ist, einen kurzen, parallel zum Steg 11 gerichteten Ansatz 13 auf. Dieser Ansatz 13 ist gleichfalls U-förmig ausgebildet und dient der Aufnahme eines Dichtungselements 14 mit Lippe 15. Das Dichtungselement 14 erstreckt sich über die Höhe der Stütze 2 und dichtet gegenüber dem in die Stütze 2 eingesetzten Dammbalken 3 ab. Konkret steht im Hochwasserfall auf einer Seite der Anordnung von Dammbalken 3 der Druck des Wassers an und drückt die Dammbalken 3 gegen die auf der der Hochwasserseite abgewandten Dichtungselemente 14. Sie dichten insgesamt und über deren Lippe 15 zu dem Dammbalken ab. Da der Wasserdruck aufgrund der Ausbildung von Dammbalken 3 und Stützen 2 auch innerhalb der Stützen 2 ansteht, wirkt der Druck auf die Rückseite der Lippe 15, somit die dem Schenkel 9 zugewandten Seite der Lippe 15. Auf der anderen Seite der Dammbalken ist das weitere Dichtungselement 14 vorgesehen, um einen universellen Einbau der Hochwasserschutzwand 1 zu gewährleisten, somit unabhängig davon, welche Seite der Stütze 2 dem erwarteten Hochwasser gegenüberliegt.

Entsprechend den Gegebenheiten können die Stützen 2 unterschiedliche Abstände zueinander aufweisen und demzufolge weisen die in benachbarte Stützen 2 einzusteckenden Dammbalken 3 eine angepasste Länge auf. So sind Dammbalken mit einer jeweiligen Länge von 500 mm bis 7 000 mm denkbar. Die Außenkontur des jeweiligen Dammbalkens 3 ist rechteckig; die Dammbalken 3 werden hochkant gestapelt.

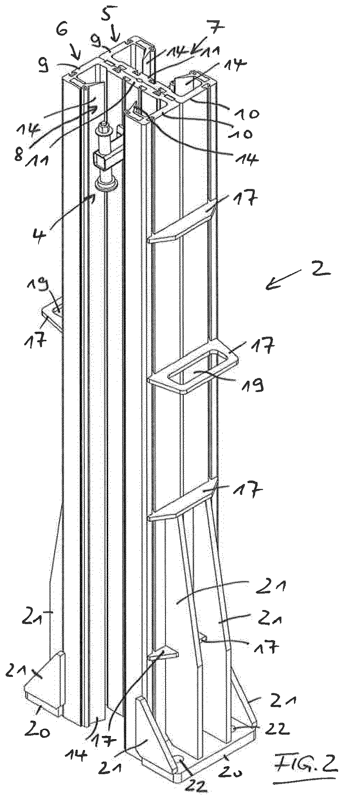

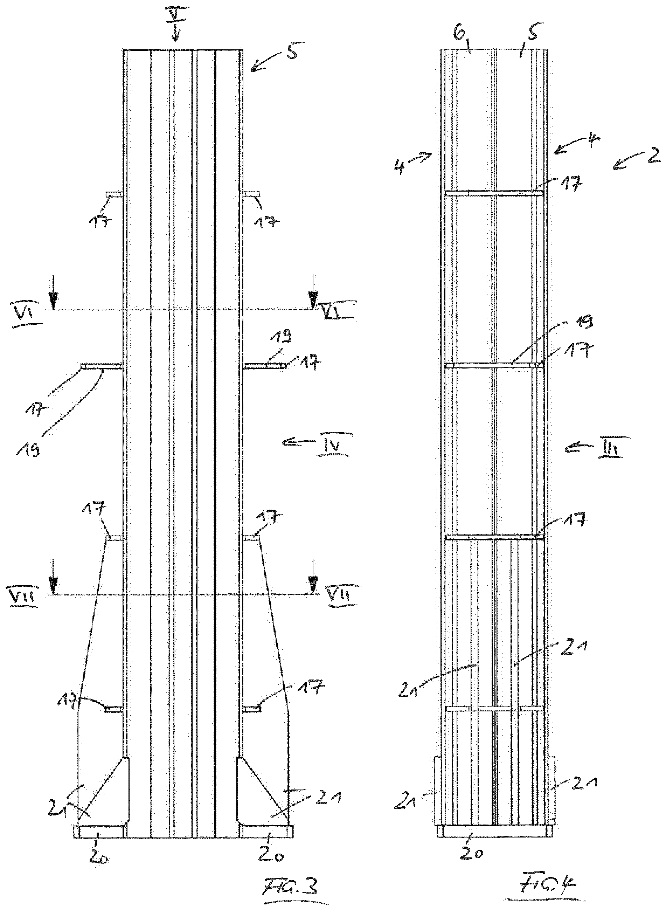

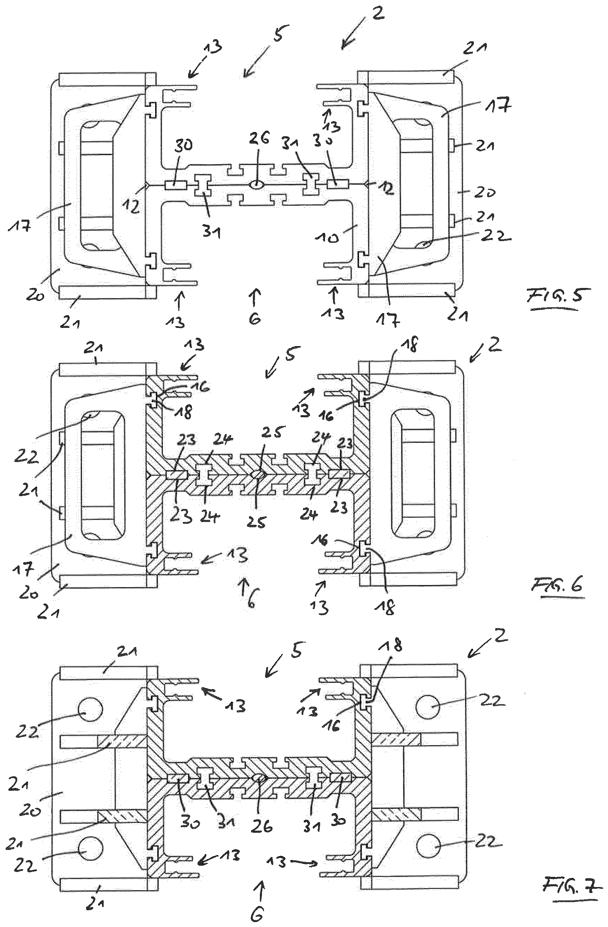

Wegen der weiteren Beschreibung wird neben der Darstellung der Fig. 1 auf die Darstellung der Fig. 2 bis 7 Bezug genommen.

So ist veranschaulicht, dass die beiden Stützenteile 5 und 6 nicht nur im Bereich der Schweißnähte 12 über Teilbereiche der Höhe der Stütze 2 miteinander verschweißt sind, sondern dass das jeweilige Stützenteil 5 bzw. 6 im Bereich dessen Schenkel 9 eine hinterschnittene Nut 16 aufweist, die sich über die Höhe des Stützenteils 5 bzw. 6 erstreckt. In jeweils zwei auf derselben Seite der Stütze 2 angeordneten Nuten 16 der beiden Stützenteile 5, 6 sind Verstärkungsteile 17, die als Bleche ausgebildet sind und Knotenbleche darstellen, eingesteckt. Das jeweilige Verstärkungsteil 17 weist entsprechend zwei T-förmige Vorsprünge 18 auf, die in die beiden Nuten 16 eingesteckt sind. Die jeweiligen Verstärkungsteile 17, wobei vier Verstärkungsteile 17 auf jeder der abgewandten Seite der Stütze 2 veranschaulicht sind, sind im Wesentlichen gleichmäßig über die Höhe der Stütze 2 verteilt positioniert und in horizontal ausgerichteter Position mit dem jeweiligen Stützenteil 5 bzw. 6 verschweißt. Die Verschweißung erfolgt im umlaufenden Bereich des Verstärkungsteils 17 mit dem zugeordneten Stützenteil 5 bzw. 6, somit mittels einer umlaufenden Schweißnaht zwischen Verstärkungsteil 17 und Stützenteil 5 bzw. 6. Das zweite der Verstärkungsteile 17, von oben betrachtet, weist dabei eine Ausnehmung 19 auf, sodass dieses Verstärkungsteil 17 die Funktion eines Handgriffs zum Tragen der Stütze 2 besitzt. In der Draufsicht betrachtet sind die Verstärkungsteile 17 im Wesentlichen trapezförmig ausgebildet. Die lange Seite des Trapezes ist dabei dem Seitenteil 5 bzw. 6 zugewandt. Dort findet die Verschweißung statt.

Zusätzlich weist die Stütze 2, im unteren Bereich, an die beiden Stützenteile 5 und 6 auf abgewandten Seiten der Stütze 2 angeschweißte Bodenplatten 20 und vertikal verlaufende Verstärkungsbleche 21 auf. Diese sind gleichfalls mit den Stützenteilen 5 bzw. 6 verschweißt.

Die Stütze 2 stellt sich somit als steifes Gebilde dar, wobei der Ausgang der Herstellung der Stütze 2 die beiden identischen als Strangpressprofil ausgebildeten Stützenteile 5 und 6 bilden, die miteinander verschweißt werden, sowie anschließend weitere Verstärkungen mit den Stützenteilen 5 und 6 verschweißt werden, in Art der Verstärkungsteile 17, 21 und Bodenplatten 20. Die Bodenplatten 20 sind mit Bohrungen, zwecks Verbinden mit Bolzen, die in ein Fundament eingelassen sind, versehen. Dadurch lässt sich die Stütze 2 fest mit dem Fundament verbinden.

Das jeweilige Stützenteil 5 bzw. 6 ist zudem im Bereich dessen Steg 11 mit zwei Nuten 23 und zwischen diesen mit zwei hinterschnittenen Nuten 24 versehen. Beim miteinander Verschweißen der beiden Stützenteile 5 und 6 bilden die beiden benachbarten Nuten 23 der beiden Stützenteile 5, 6 eine Gesamtnut mit rechteckigem Querschnitt. In diese Nut kann von oben ein rechteckförmiger Stab 30 eingesteckt werden, der dem Zweck dient, die Scherfestigkeit des Gebildes aus Stützenteil 5 und Stützenteil 6 zu erhöhen. Somit können über diesen Stab 30 Scherkräfte, die je nach Druckrichtung des Hochwassers auf Schenkel 9 oder 10 des einen Stützenteils 5 einwirken, über den in die jeweilige Anordnung der Nuten 23 eingesetzten Stab 30 in das andere Stützenteil 6 übertragen werden. Hiervon abgesehen bilden die jeweils benachbarten hinterschnittenen Nuten 24 einen H-förmigen Querschnitt.

In diesen kann ein im Querschnitt H-förmiger Stab 31 eingesetzt werden. Dieser Stab 31 trägt erheblich zur Biegesteifigkeit der Stütze 2 bei und es kann ein solcher Stab 31 auch Zugkräfte, die unter Einwirkung des Hochwassers in Längsrichtung der Dammbalken 3 zwischen den beiden Stützenteilen 5, 6 wirksam sind, aufnehmen.

Zusätzlich weist der jeweilige Steg 11 auf seiner dem anderen Steg 11 zugewandten Seite, in einem zentralen Bereich des Stegs 11, eine sich über die Höhe des Stützenteils 5 bzw. 6 erstreckende, nach innen gewölbte Nut 25 auf. Diese dient der Aufnahme einer sich über die Höhe der Stütze 2 erstreckenden Dichtung 26.

Statt bzw. zusätzlich zu den beschriebenen mechanischen Verbindungen und Schweißverbindungen zur Bildung der Stütze 2 können Verbindungen durchaus auch als Klebeverbindungen gestaltet sein. Beispielsweise können die beiden Stützenteile 5 und 6 im Bereich der Stege 11 miteinander verklebt sein.

### Bezugszeichenliste

- 1: Hochwasserschutzwand
- 2: Stütze
- 3: Dammbalken
- 4: Niederhalter
- 5: Erstes Stützenteil
- 6: Zweites Stützenteil
- 7: Erste Aufnahme
- 8: Zweite Aufnahme
- 9: Schenkel
- 10: Schenkel
- 11: Steg
- 12: Schweißnaht
- 13: Ansatz
- 14: Dichtungselement
- 15: Lippe
- 16: Hinterschnittene Nut
- 17: Verstärkungsteil
- 18: T-förmiger Vorsprung
- 19: Ausnehmung
- 20: Bodenplatte
- 21: Verstärkungsteil
- 22: Bohrung
- 23: Nut
- 24: Hinterschnittene Nut
- 25: Nut
- 26: Dichtung
- 30: Stab
- 31: Stab

## Patentansprüche

1. Stütze (2) einer Hochwasserschutzwand (1), wobei die Stütze (2) auf abgewandten Seiten der Lagerung von übereinander stapelbaren Dammbalken (3) der Hochwasserschutzwand (1) dient, sowie die Stütze (2) entgegengesetzt angeordnete U-förmige Aufnahmen (7, 8) für Enden der Dammbalken (3) aufweist, wobei die Stütze (2) mehrteilig ausgebildet ist, wobei ein Stützenteil (5) eine U-förmige Aufnahme (7) und ein weiteres Stützenteil (6) eine andere U-förmige Aufnahme (8) aufweist, sowie die Verbindung des jeweiligen Stützenteils (5 bzw. 6) zur Bildung der Stütze (2) in dem Bereich dieses Stützenteils (5 bzw. 6) erfolgt, der dem anderen Stützenteil (6 bzw. 5) zugewandt ist, sowie die beiden Stützenteile (5, 6) aneinanderliegend angeordnet sind, wobei die Stütze (2) weiterhin mindestens ein mechanisches Verbindungsmittel (31) aufweist, und wobei das jeweilige Stützenteil (5 bzw. 6) auf seiner dem anderen Stützenteil (6 bzw. 5) zugewandten Seite mindestens eine Aufnahme (24) für das mindestens eine mechanische Verbindungsmittel (31) aufweist, zwecks Verbinden dieser beiden Stützenteile (5, 6) durch Zusammenwirken des Verbindungsmittels (31) mit den beiden Stützenteilen (5, 6), **dadurch gekennzeichnet, dass** die jeweilige Aufnahme (24) für das Verbindungsmittel (31) als sich in Längsrichtung des Stützenteils (5 bzw. 6) erstreckende hinterschnittene Nut (24) ausgebildet ist und das Verbindungsmittel (31) als Stab (31) ausgebildet ist, wobei der Stab (31) in benachbart angeordnete Nuten (23, 23; 24, 24) der beiden Stützenteile (5, 6) eingesteckt ist.

2. Stütze nach Anspruch 1, **dadurch gekennzeichnet, dass** das jeweilige Stützenteil (5 bzw. 6) auf seiner dem anderen Stützenteil (6 bzw. 5) zugewandten Seite mindestens eine Aufnahme (23) für mindestens ein mechanisches Versteifungsmittel (30) aufweist, zwecks Versteifen dieser beiden Stützenteile (5, 6) durch Zusammenwirken des Versteifungsmittels (30) mit den beiden Stützenteilen (5, 6).

3. Stütze nach Anspruch 1 oder 2, **dadurch gekennzeichnet, dass** der Stab (31) als im Querschnitt H-förmiger Stab (31) ausgebildet ist.

4. Stütze nach Anspruch 2 oder 3 wenn von Anspruch 2 abhängig, **dadurch gekennzeichnet, dass** die jeweilige Aufnahme (23) für das Versteifungsmittel (30) als sich in Längsrichtung des Stützenteils (5 bzw. 6) erstreckende Nut (23) ausgebildet ist und das Versteifungsmittel (30) als im Querschnitt rechteckiger Stab (30) ausgebildet ist, wobei der im Querschnitt rechteckige Stab (30) in benachbart angeordnete Nuten (23, 23) der beiden Stützenteile (5, 6) eingesteckt ist.

5. Stütze nach einem der Ansprüche 1 bis 4, **dadurch gekennzeichnet, dass** das jeweilige Stützenteil (5, 6) als stranggepresstes oder gegossenes Stützenteil ausgebildet ist.

6. Stütze nach einem der Ansprüche 1 bis 5, **dadurch gekennzeichnet, dass** das jeweilige Stützenteil (5, 6) als Hohlkörper ausgebildet ist.

7. Stütze nach einem der Ansprüche 1 bis 6, **dadurch gekennzeichnet, dass** das jeweilige Stützenteil (5, 6) aus Metall, insbesondere aus Aluminium oder einer Aluminiumlegierung besteht.

8. Stütze nach einem der Ansprüche 1 bis 7, **dadurch gekennzeichnet, dass** die Stützenteile (5, 6) mittels Klebemitteln und/oder mittels Schweißen miteinander verbunden sind.

9. Stütze nach einem der Ansprüche 1 bis 8, **dadurch gekennzeichnet, dass** sich der Stab (30, 31) über eine Teillänge oder die gesamte Länge der Stütze (2) erstreckt, insbesondere der Stab (30, 31) sich über eine Länge der Stütze (2) erstreckt, die mindestens 10 Prozent der Stützenlänge beträgt.

10. Stütze nach einem der Ansprüche 1 bis 9, **dadurch gekennzeichnet, dass** die die U-förmige Aufnahmen (7, 8) aufweisenden Stützenteile (5, 6) Aufnahmen (16) für mindestens ein die Stütze (2) verstärkendes Verstärkungsteil (17) aufweisen, wobei das Verstärkungsteil (17) mit diesen beiden Stützenteile (5, 6) verbunden ist, vorzugsweise mit diesen beiden Stützenteilen (5, 6) dauerhaft verbunden ist, insbesondere mit diesen beiden Stützenteilen (5, 6) verschweißt ist.

11. Stütze nach Anspruch 10, **dadurch gekennzeichnet, dass** das Verstärkungsteil (17) senkrecht zur Längserstreckung oder in Längserstreckung der Stütze (2) angeordnet ist.

12. Stütze nach Anspruch 10 oder 11, **dadurch gekennzeichnet, dass** das Verstärkungsteil (17) als Blech ausgebildet ist.

13. Stütze nach einem der Ansprüche 1 bis 12, **dadurch gekennzeichnet, dass** sie in deren Längserstreckung verlaufende Dichtungselemente (14, 26) aufweist, insbesondere Dichtungselemente (26) zwischen den Stützenteilen (5, 6) und/oder Dichtungselemente (14) an den zu einer Trockenseite der Hochwasserschutzwand (1) gelegenen Schenkeln (9 bzw. 10) der U-förmigen Aufnahmen (7, 8).

## Claims

1. Support (2) of a flood protection wall (1), wherein the support (2) serves, on opposed sides, for the mounting of dam beams (3) of the flood protection wall (1) that can be stacked above one another, and the support (2) has oppositely arranged U-shaped receptacles (7, 8) for ends of the dam beams (3), wherein the support (2) is of multipart design, wherein one support part (5) has a U-shaped receptacle (7) and a further support part (6) has another U-shaped receptacle (8), and the connection of the respective support part (5 or 6) to form the support (2) occurs in that region of this support part (5 or 6) which faces the other support part (6 or 5), and the two support parts (5, 6) are arranged bearing against one another, wherein the support (2) furthermore has at least one mechanical connection means (31), and wherein the respective support part (5 or 6) has, on its side facing the other support part (6 or 5) at least one receptacle (24) for the at least one mechanical connection means (31), for the purpose of connecting these two support parts (5, 6) by interaction of the connection means (31) with the two support parts (5, 6), **characterized in that** the respective receptacle (24) for the connection means (31) is designed as an undercut groove (24) which extends in the longitudinal direction of the support part (5 or 6), and the connection means (31) is designed as a bar (31), wherein the bar (31) is plugged into adjacently arranged grooves (23, 23; 24, 24) of the two support parts (5, 6).

2. Support according to Claim 1, **characterized in that** the respective support part (5 or 6) has, on its side facing the other support part (6 or 5), at least one receptacle (23) for at least one mechanical stiffening means (30), for the purpose of stiffening these at least two support parts (5, 6) by interaction of the stiffening means (30) with the two support parts (5, 6).

3. Support according to Claim 1 or 2, **characterized in that** the bar (31) is designed as a cross-sectionally H-shaped bar (31).

4. Support according to Claim 2 or 3 when dependent on Claim 2, **characterized in that** the respective receptacle (23) for the stiffening means (30) is designed as a groove (23) which extends in the longitudinal direction of the support part (5 or 6), and the stiffening means (30) is designed as a cross-sectionally rectangular bar (30), wherein the cross-sectionally rectangular bar (30) is plugged into adjacently arranged grooves (23, 23) of the two support parts (5, 6).

5. Support according to one of Claims 1 to 4, **characterized in that** the respective support part (5, 6) is designed as an extruded or cast support part.

6. Support according to one of Claims 1 to 5, **characterized in that** the respective support part (5, 6) is designed as a hollow body.

7. Support according to one of Claims 1 to 6, **characterized in that** the respective support part (5, 6) consists of metal, in particular of aluminium or an aluminium alloy.

8. Support according to one of Claims 1 to 7, **characterized in that** the support parts (5, 6) are connected to one another by means of adhesives and/or by means of welding.

9. Support according to one of Claims 1 to 8, **characterized in that** the bar (30, 31) extends over a partial length or the entire length of the support (2), with in particular the bar (30, 31) extending over a length of the support (2) that is at least 10 per cent of the support length.

10. Support according to one of Claims 1 to 9, **characterized in that** the support parts (5, 6) having the U-shaped receptacles (7, 8) have receptacles (16) for at least one reinforcing part (17) which reinforces the support (2), wherein the reinforcing part (17) is connected to these two support parts (5, 6), preferably is permanently connected to these two support parts (5, 6), in particular is welded to these two supports parts (5, 6) .

11. Support according to Claim 10, **characterized in that** the reinforcing part (17) is arranged perpendicular to the longitudinal extent or in the longitudinal extent of the support (2).

12. Support according to Claim 10 or 11, **characterized in that** the reinforcing part (17) takes the form of a metal sheet.

13. Support according to one of Claims 1 to 12, **characterized in that** it has sealing elements (14, 26) running in its longitudinal extent, in particular sealing elements (26) between the support parts (5, 6) and/or sealing elements (14) on the legs (9 or 10), which are situated towards a dry side of the flood protection wall (1), of the U-shaped receptacles (7, 8).

## Revendications

1. Support (2) pour un mur de protection contre les inondations (1), le support (2), sur des côtés opposés, servant à supporter des batardeaux empilables les uns sur les autres (3) du mur de protection contre les inondations (1), et le support (2) présentant des logements en forme de U disposés de manière opposée (7, 8) pour des extrémités des batardeaux (3), le support (2) étant réalisé en plusieurs parties, une partie du support (5) présentant un logement en forme de U (7) et une partie du support supplémentaire (6) présentant un autre logement en forme de U (8), et la connexion de la partie du support respective (5, respectivement 6) pour former le support (2) ayant lieu dans la région de cette partie du support (5, respectivement 6) qui est tournée vers l'autre partie du support (6, respectivement 5), et les deux parties du support (5, 6) étant disposées l'une contre l'autre, le support (2) présentant en outre au moins un moyen de connexion mécanique (31), et la partie du support respective (5, respectivement 6) présentant, sur son côté tourné vers l'autre partie du support (6, respectivement 5), au moins un logement (24) pour l'au moins un moyen de connexion mécanique (31) afin de connecter ces deux parties du support (5, 6) par coopération du moyen de connexion (31) avec les deux parties du support (5, 6), **caractérisé en ce que** le logement respectif (24) pour le moyen de connexion (31) est réalisé sous forme de rainure en contre-dépouille (24) s'étendant dans la direction longitudinale de la partie du support (5, respectivement 6) et le moyen de connexion (31) est réalisé sous forme de barre (31), la barre (31) étant enfoncée dans des rainures disposées de manière adjacente (23, 23 ; 24, 24) des deux parties du support (5, 6).

2. Support selon la revendication 1, **caractérisé en ce que** la partie du support respective (5, respectivement 6) présente, sur son côté tourné vers l'autre partie du support (6, respectivement 5), au moins un logement (23) pour au moins un moyen de rigidification mécanique (30), afin de rigidifier ces deux parties du support (5, 6) par coopération du moyen de rigidification (30) avec les deux parties du support (5, 6).

3. Support selon la revendication 1 ou 2, **caractérisé en ce que** la barre (31) est réalisée sous forme de barre de section transversale en forme de H (31).

4. Support selon la revendication 2 ou 3 lorsqu'elle dépend de la revendication 2, **caractérisé en ce que** le logement respectif (23) pour le moyen de rigidification (30) est réalisé sous forme de rainure (23) s'étendant dans la direction longitudinale de la partie du support (5, respectivement 6) et le moyen de rigidification (30) est réalisé sous forme de barre de section transversale rectangulaire (30), la barre de section transversale rectangulaire (30) étant enfoncée dans des rainures disposées de manière adjacente (23, 23) des deux parties du support (5, 6).

5. Support selon l'une quelconque des revendications 1 à 4, **caractérisé en ce que** la partie du support respective (5, 6) est réalisée sous forme de partie du support extrudée ou coulée.

6. Support selon l'une quelconque des revendications 1 à 5, **caractérisé en ce que** la partie du support respective (5, 6) est réalisée sous forme de corps creux.

7. Support selon l'une quelconque des revendications 1 à 6, **caractérisé en ce que** la partie du support respective (5, 6) se compose de métal, en particulier d'aluminium ou d'un alliage d'aluminium.

8. Support selon l'une quelconque des revendications 1 à 7, **caractérisé en ce que** les parties du support (5, 6) sont connectées l'une à l'autre par des moyens adhésifs et/ou par soudage.

9. Support selon l'une quelconque des revendications 1 à 8, **caractérisé en ce que** la barre (30, 31) s'étend sur une partie de la longueur ou sur toute la longueur du support (2), en particulier la barre (30, 31) s'étend sur une longueur du support (2) qui représente au moins 10 % de la longueur du support.

10. Support selon l'une quelconque des revendications 1 à 9, **caractérisé en ce que** les parties du support (5, 6) présentant les logements en forme de U (7, 8) présentent des logements (16) pour au moins une partie de renforcement (17) renforçant le support (2), la partie de renforcement (17) étant connectée à ces deux parties du support (5, 6), de préférence étant connectée de manière durable à ces deux parties du support (5, 6), en particulier étant soudée à ces deux parties du support (5, 6).

11. Support selon la revendication 10, **caractérisé en ce que** la partie de renforcement (17) est disposée perpendiculairement à l'étendue longitudinale ou suivant l'étendue longitudinale du support (2).

12. Support selon la revendication 10 ou 11, **caractérisé en ce que** la partie de renforcement (17) est réalisée sous forme de tôle.

13. Support selon l'une quelconque des revendications 1 à 12, **caractérisé en ce qu'**il présente des éléments d'étanchéité (14, 26) s'étendant suivant son étendue longitudinale, en particulier des éléments d'étanchéité (26) entre les parties du support (5, 6) et/ou des éléments d'étanchéité (14) au niveau des branches (9, respectivement 10) des logements en forme de U (7, 8), situées vers un côté sec du mur de protection contre les inondations (1).
